# EUROPEAN PATENT APPLICATION

(11) **EP 4 282 646 A1**
(43) Date of publication of application: **29.11.2023**
(21) Application number: 22175432.8
(22) Date of filing: 25.05.2022
(51) Int. Cl.: B32B 5/26, B32B 5/02, B32B 5/12, B32B 7/06, B32B 17/04

(54) **MULTILAYER FIBER COMPOSITE MATERIAL, METHOD FOR PRODUCING A MULTILAYER FIBER COMPOSITE MATERIAL AND METHOD FOR DETACHING A FIBER LAYER FROM A MULTILAYER FIBER COMPOSITE MATERIAL**

(71) Applicant: Fraunhofer-Gesellschaft zur Förderung der angewandten Forschung e.V., 80686 München (DE)
(72) Inventor: MAY, Michael, 79104 Freiburg (DE)
(74) Representative: 2SPL Patentanwälte PartG mbB

(57) **Abstract**

A multilayer fiber composite material is provided. The fiber composite material comprises a matrix material and a plurality of fiber layers embedded in the matrix material. The fiber composite material further comprises an expansion material between at least one fiber layer of the plurality of fiber layers and at least one other fiber layer of the plurality of fiber layers. The expansion material is configured to, upon introduction of energy into the expansion material, expand for at least partially detaching at least one fiber layer of the plurality of fiber layers from the remaining fiber composite material.

## Description

### Field

The present disclosure relates to a multilayer fiber composite material. Examples relate to a method for producing a multilayer fiber composite material and to a method for detaching a fiber layer from a multilayer fiber composite material.

### Background

The production of fiber composite materials usually consumes lots of resources, e.g., fossil fuels for the production of polymer resins or carbon fibers. With the increasing use of such fiber composite material, it may be of high interest to preserve the valuable fibers when the operating lifetime of the fiber composite materials reaches its end. Conventional recycling methods, however, may significantly shorten the length of fibers and, thereby, degrade the quality of the fibers. Hence, there may be a demand for improved fiber preservation.

### Summary

The demand may be satisfied by the subject matter of the appended claims.

According to a first aspect, the present disclosure provides a multilayer fiber composite material. The fiber composite material comprises a matrix material and a plurality of fiber layers embedded in the matrix material. The fiber composite material further comprises an expansion material between at least one fiber layer of the plurality of fiber layers and at least one other fiber layer of the plurality of fiber layers. The expansion material is configured to, upon introduction of energy into the expansion material, expand for at least partially detaching at least one fiber layer of the plurality of fiber layers from the remaining fiber composite material.

According to a second aspect, the present disclosure provides a method for producing a multilayer fiber composite material. The method comprises introducing an expansion material into the fiber composite material. The expansion material is configured to, upon introduction of energy into the expansion material, expand for at least partially detaching at least one fiber layer of the plurality of fiber layers from the remaining fiber composite material.

According to a third aspect, the present disclosure provides a method for detaching a fiber layer from a multilayer fiber composite material as described herein. The method comprises introducing energy into the expansion material to expand the expansion material for at least partially detaching the fiber layer from the remaining fiber composite material.

### Brief description of the Figures

Some examples of apparatuses and/or methods will be described in the following by way of example only, and with reference to the accompanying figures, in which
Fig. 1 illustrates an example of a multilayer fiber composite material;
Fig. 2a, 2b illustrate examples of a method for producing a multilayer fiber composite material;
Fig. 3 illustrates an example of a method for detaching a fiber layer from a multilayer fiber composite material;
Fig. 4 illustrates an example of an apparatus for producing a multilayer fiber composite material; and
Fig. 5 illustrates an example of an apparatus for detaching a fiber layer from a multilayer fiber composite material.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

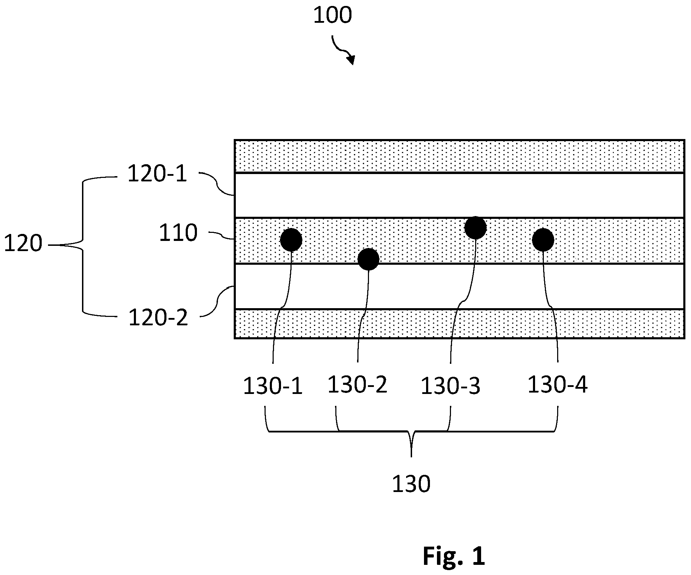

Fig. 1 illustrates an example of a multilayer fiber composite material 100. The fiber composite material 100 comprises a matrix material 110 and a plurality of fiber layers 120 embedded in the matrix material 110. By way of illustration, two fiber layers 120-1 and 120-2 are shown in Fig. 1. It is to be noted that a fiber composite material discussed herein may exhibit any number n ≥ 2 of fiber layers 120.

Fig. 1 shows a cross section of the multilayer fiber composite material 100 revealing its stacked fiber layers 120 which extend horizontally. The fiber layers 120 may be formed by fiber mats extending along a plane perpendicular to the cross section shown in Fig. 1. By way of example, the fiber composite material 100 is illustrated in Fig. 1 as elongated, flat and level piece. In other examples of the present disclosure, the fiber composite material 100 may exhibit a different shape than the one shown in Fig. 1, e.g., a rounded shape.

The matrix material 110 may serve as filler or adhesive between the fiber layers 120, protect the fiber layers 120 from environmental impacts or give the fiber composite material 100 its shape. The matrix material 110 may be of any type, such as polymer, ceramic, metal, cement, carbon or alike. In some examples, the matrix material 110 comprises at least one of a thermoset or a thermoplastic.

The fiber layers 120 may serve as a reinforcement of the matrix material 110. The fiber layers 120 may be a composite of fibers of any length, e.g., short (e.g. < 2 millimeters), long (e.g. > 2 millimeters and < 10 millimeters), very long (e.g. >> 10 millimeters), or continuous (endless) fibers. The fibers may be of any type, e.g., carbon, glass, ceramic, metal, or combinations thereof.

A suitable combination of fibers and matrix material may result in increased mechanical and physical properties. The fiber composite material 100 may exhibit a lower weight than materials with similar mechanical and physical properties, thus, may be applicable in lightweight or high-performance applications such as aerospace, automotive and wind energy, shipbuilding or sports equipment. The mechanical properties (strength, rigidity) of the fiber composite material 100 may correlate with the length of the fibers: longer fibers may lead to enhanced mechanical properties, thus, the length of the fibers may correlate with their quality and economic value.

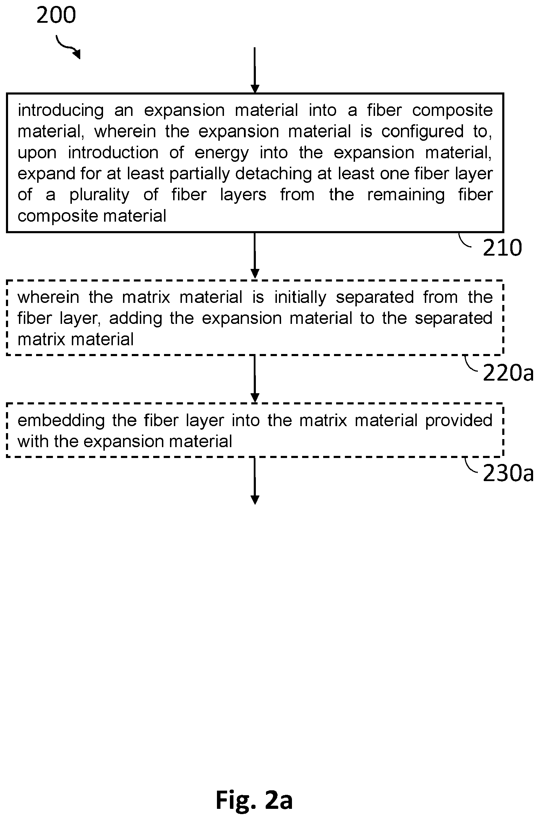

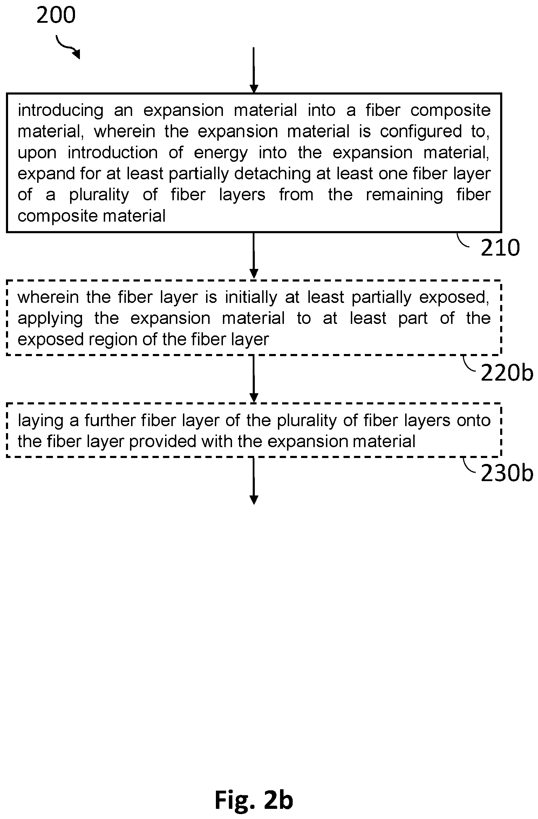

An objective of the techniques disclosed herein may be to preserve the length of the fibers after recycling the fiber composite material, such as the fiber composite material 100. The techniques may improve fiber preservation following the principle of "Design for Recycling", i.e., the recycling is taken into account in the manufacture of the fiber composite material. This may be realized based on the use of expansion materials as explained below. The production of such a fiber composite material is further explained with reference to Fig. 2a and Fig. 2b.

The fiber composite material 100 comprises an expansion material 130 between at least one fiber layer of the plurality of fiber layers 120 and at least one other fiber layer of the plurality of fiber layers 120. In Fig. 1, the expansion material 130 is indicated by four round particles 130-1, 130-2, 130-3, 130-4 which are irregularly spread between the fiber layer 120-1 and the (other) fiber layer 120-2. It is to be noted that the structure of the expansion material 130 may differ from the one shown in Fig. 1, e.g., the expansion material 130 may comprise any number of particles, may be a homogenous substance, e.g., an additional layer between the fiber layer 120-1 and the other fiber layer 120-2, or may comprise particles of a different shape, e.g., a grainy or fragmented shape. Further, the expansion material 130 may be arranged differently than shown in Fig. 1, e.g., the expansion material 130 may be arranged regularly between the fiber layer 120-1 and the other fiber layer 120-2, substantially arranged at a surface of the fiber layer 120-1 facing the other fiber layer 120-2, or at a certain part of the fiber layer 120-1, e.g., only at a middle or an edge of the fiber layer 120-1.

The expansion material 120 is configured to, upon introduction of energy into the expansion material 120, expand for at least partially detaching at least one fiber layer of the plurality of fiber layers 120 from the remaining fiber composite material 100. The fiber layer to be detached may be the fiber layer 120-1, the other fiber layer 120-2 or a different fiber layer of the plurality of fiber layers 120 (in case there are more than two). The introduction of energy may be executed when the detachment of the fiber layer is desired, e.g., for recycling, reprocessing, repair, or inspection of the fiber composite material 100.

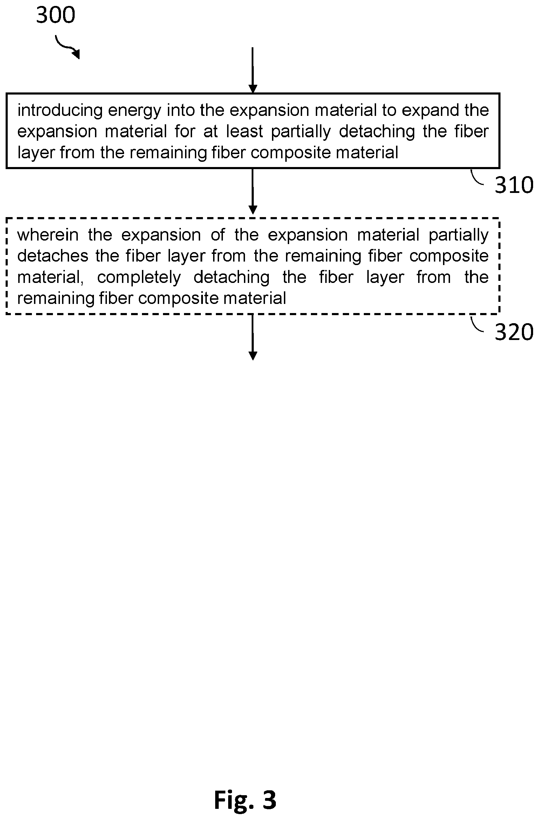

The introduction of energy may be considered an external trigger which activates the expansion material 130. The activation may initiate its expansion and may displace the matrix material 110 or put the matrix material 110 under mechanical loading. For instance, the fiber composite material 100 may be in a consolidated state and, therefore, crack within the matrix material 110 upon the expansion of the expansion material 120 - given a certain degree of expansion of the expansion material 130 which may be aligned to the overall rigidity of the fiber composite material 100. The cracks may cause a separation (e.g., delamination) of the fiber layer from the remaining fiber composite material 100. The detachment of the fiber layer is further explained with reference to Fig. 3.

The expansion material 130 may be any material which may expand upon the introduction of energy. For instance, the expansion material 130 may increase its volume upon expansion by a factor of at least 10 or at least 50. In some examples, the expansion material 130 may increase its volume upon expansion by, e.g., a factor between 10 and 250 or a factor between 50 and 100 The expansion material 130 may produce, e.g., a gas upon activation which may be caused by thermal decomposition or a chemical or physical reaction. The expansion material 130 may be expanded in a controlled manner. For instance, the type of energy and a value range for an amount of the energy to be introduced into the expansion material may be predefined. These parameters of the introduction of energy may be specific for the fiber composite material 100 and depend, e.g., on a type of the expansion material 130, a desired degree of detachment of the fiber layer, or the mass fraction of the expansion material 130 relative to the total mass of the fiber composite material 100.

The expansion material 130 may comprise at least one of an inorganic expansion material and an organic expansion material. The expansion material 130 may, for example, comprise at least one of a chemical foaming agent (CFA), a physical foaming agent (PFA) and an expandable graphite. For instance, the expansion material 130 may comprise at least one of azodicarbonamide (ADC; CAS RN: 123-77-3); azobisisobutyronitrile (AIBN; CAS RN: 78-67-1); a hydrazide such as p,p'-oxybisbenzenesulfonylhydrazide (CAS RN: 80-51-8), p-toluenesulfonyl hydrazide (CAS RN: 1576-35-8) and benzenesulfonylhydrazide (CAS RN 80-17-1); a carbazide such as p-toluenesulfonylsemicarbazide (CAS RN: 10396-10-18) and p,p'-oxybisbenzenesulfonylsemicarbazide (CAS RN: 10195-67-2); a tetrazole such as 5-phenyltetrazole (CAS RN: 18039-42-4); a carbonate such as sodium bicarbonate (CAS RN 144-55-8); a nitroso compound such as N,N'-dinitroso-pentamethylenetetramine (CAS RN 101-25-7); nitrogen and hydrofluorocarbon. In case the expansion material 130 is provided as flakes or particles, it may further be coated or encapsulated.

The variety of possible compositions of the expansion material 130 may enable a precise adjustment to the desired detachment and to the remaining components of the fiber composite material 100, e.g., the matrix material 110 and the fibers of the fiber layers 120. Similarly, the fiber composite material 100 may enable a versatile use for different applications. The use of azodicarbonamide or azobisisobutyronitrile may be advantageous regarding costs and availability.

In some examples, a mass fraction of the expansion material 130 relative to a total mass of the fiber composite material 100 may be between 0.1 and 40 percent. In some examples, the mass fraction may be between 0.5 and 10 percent. This may provide a good balancing between a low share of the expansion material 130 in the overall material (since a high amount of the expansion material 130 may possibly interfere with the desired properties of the fiber composite material 100 or may be expensive) and its functionality (since a low amount of the expansion material 130 may be insufficient for a certain degree of detachment).

Conventional fiber composite materials may be difficult to recycle in a fiber-preserving way. During recycling, the conventional fiber composite materials may be mechanically shredded which may lead to a reduction in fiber length or damage to the fibers and, thus, reduce the material quality. By contrast, the fiber composite material described herein, such as the fiber composite material 100, comprises an expansion material for detaching individual fiber layers from the fiber composite material. Thus, the fiber composite material may enable a fiber-preserving recovery of the fiber layers or portions thereof. The fiber composite material may enable an energy-saving production of new fiber composite materials since the recovered fiber layers may be directly reused.

**Fig. 2a** and **Fig. 2b** illustrate a flowchart of examples of a method 200 for producing a multilayer fiber composite material, such as the multilayer fiber composite material 100. The method 200 comprises introducing 210 an expansion material, such as the expansion material 130 explained above, into the fiber composite material. The expansion material is configured to, upon introduction of energy into the expansion material, expand for at least partially detaching at least one fiber layer of the plurality of fiber layers from the remaining fiber composite material. It is to be noted that further steps of the method 200 illustrated in Fig. 2a and Fig. 2b are optional. Alternatively to the options shown in Fig. 2a and Fig. 2b, the expansion material may be injected into the finished fiber composite material.

In some examples, introducing 210 the expansion material into the fiber composite material comprises introducing the expansion material into a matrix material of the fiber composite material. For instance, the expansion material and the fiber composite material may be mixed. This may ensure that the expansion material is homogenously distributed between the fiber layer and the remaining fiber composite material.

In some examples, the matrix material may be initially separated from the fiber layer during the production of the fiber composite material. This may be relevant for, e.g., vacuum infusion processes. Introducing the expansion material into the matrix material may optionally comprise adding 220a (Fig. 2a) the expansion material to the separated matrix material. The method 200 further optionally comprises embedding 230a (Fig. 2a) the fiber layer into the matrix material provided with the expansion material. For instance, the fiber layer may be embedded into the matrix material based on a vacuum infusion process. In the vacuum infusion process, dry semi-finished products (scrims, fabrics, braids) may be placed in a mould. Individual fiber layers, e.g., exhibiting different fiber orientations, may be deposited on top of each other. Afterwards, a synthetic resin (the matrix material) provided with the expansion material may be sucked into the fiber layers under vacuum and then cured with a predefined temperature. The method 200 may, thus, be easily applied to the vacuum infusion process which may enable the production of high-quality fiber composite materials.

In some examples, the fiber layer may be initially at least partially exposed. Introducing 210 the expansion material into the fiber composite material may comprise applying 220b (Fig. 2b) the expansion material to at least part of the exposed region of the fiber layer. For instance, the fiber layers may be stacked one over another, causing the topmost fiber layer to be temporarily exposed. The expansion material may be applied to the exposed region before a further fiber layer of the plurality of fiber layers is deposited on top. The expansion material may be applied to the exposed region, e.g., by spraying it onto the exposed region. The method 200 further comprises laying the further fiber layer onto the fiber layer provided with the expansion material.

The latter may be applicable to a vacuum infusion process and a prepreg process. In the first case, the fiber layer may be initially separated from the matrix material of the fiber composite material. The method 200 may further comprise embedding the fiber layer into the matrix material after applying 220b the expansion material to the fiber layer. In the case of a prepreg process, the fiber layer may be initially pre-impregnated with a matrix material of the fiber composite material and the method 200 may further comprise curing the matrix material after laying the further fiber layer onto the fiber layer. In a prepreg process usually pre-impregnated fiber mats may be placed in a mould. Analogously to the vacuum infusion process, individual fiber layers (but provided with the expansion material) may be deposited on top of each other. Subsequent to the depositing process, the matrix material may be cured with a predefined temperature. An addition of resin may be omitted since the fiber mats are provided as semi-finished products wetted with the resin. Hence, the method 200 may be suitable for various production types for fiber composite material. The method 200 may enable the production of a fiber composite material as described herein without complex adjustments of existing production facilities.

It is to be noted that it may be necessary to prevent the process temperature of the method 200 (e.g., during infiltration of the matrix material or the curing process) to exceed a trigger temperature of the expansion material (in case the expansion material is activatable by temperature).

**Fig. 3** illustrates a flow chart of an example of a method 300 for detaching a fiber layer from a multilayer fiber composite material, such as the multilayer fiber composite material 100. The detachment of the fiber layer may be useful, e.g., for recycling, repair or inspection of the fiber composite material.

The method 300 comprises introducing 310 energy into the expansion material to expand the expansion material for at least partially detaching the fiber layer from the remaining fiber composite material. For instance, introducing 310 energy into the expansion material may comprise at least one of heating the expansion material, conducting an electric current through the expansion material and irradiating the expansion material with electromagnetic waves.

In some examples, the fiber layer may be entirely detached based on the expansion of the expansion material. In other examples, the expansion of the expansion material may partially detach the fiber layer from the remaining fiber composite material. For the latter case, the method 300 may optionally further comprise completely detaching the fiber layer from the remaining fiber composite material. For instance, the remaining attached portions of the fiber layers may be mechanically detached, e.g., by stripping the fiber layer. Thus, the method 300 may support mechanical detachment methods in order to preserve the fibers.

The method 300 may optionally comprise further processing of the detached fiber layer. For instance, the method 300 may further comprise removing the matrix material from the detached fiber layer, e.g., based on pyrolysis. The method 300 may, therefore, allow embedding the detached matrix-free fiber layer into a new matrix material, e.g., if the matrix material was degraded, if it comprises a thermoset which is not newly shapeable, or if a different type of matrix material is envisaged for the reuse of the fiber layer. In some examples, the method 300 may further comprise reshaping the matrix material of the detached fiber layer. For instance, in case of a thermoplastic matrix material, the recovered fiber layers may be heated and used in the production of new composites. In some examples, the method may further comprise producing a further multilayer fiber composite material by including the detached fiber layer into the further fiber composite material and introducing an expansion material into the further fiber composite material. For instance, the method 300 may include the method 200 for producing new fiber composite materials based on the recovered fiber layer and, therefore, provide it with several life cycles without significant quality decrease.

In conclusion, the method 300 may enable the recovery of large parts of fiber layers without inducing fiber shortening or fiber damage.

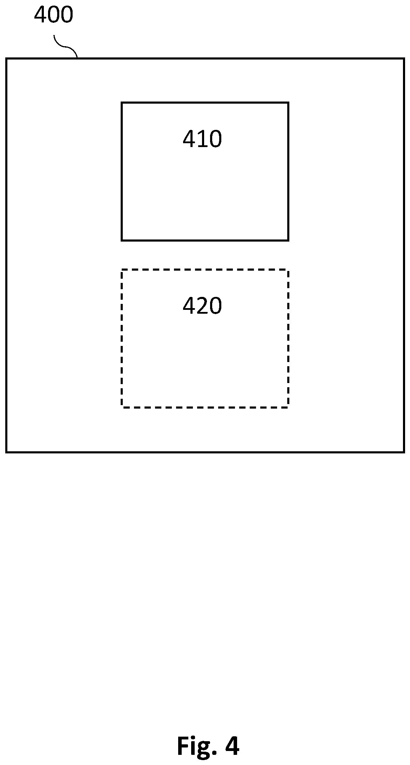

**Fig. 4** illustrates an example of an apparatus 400 for producing a multilayer fiber composite material as described herein, such as the multilayer fiber composite material 100. The apparatus 400 comprises means 410 for introducing the expansion material into the fiber composite material based on a method for producing a multilayer fiber composite material, such as method 200. In case that the matrix material is initially separated from the fiber layer, the apparatus 400 optionally comprises second means 420 for, e.g., adding the expansion material to the separated matrix material. The means 410 may then be configured to embed the fiber layer into the matrix material provided with the expansion material. Alternatively, in case that the fiber layer is initially at least partially exposed, the second means 420 may be for applying the expansion material to at least part of the exposed region of the fiber layer. The means 410 may then be configured to lay a further fiber layer of the plurality of fiber layers onto the fiber layer provided with the expansion material.

More details and aspects of apparatus 400 are explained in connection with the proposed technique or one or more examples described above, e.g., with reference to Fig. 1, 2a or 2b. The apparatus 400 may comprise one or more additional optional features corresponding to one or more aspects of the proposed technique, or one or more examples described above.

The apparatus 400 may enable the production of a fiber composite material such that fiber layers may be detached in a fiber-preserving way, e.g., for a later recycling of the fiber composite material.

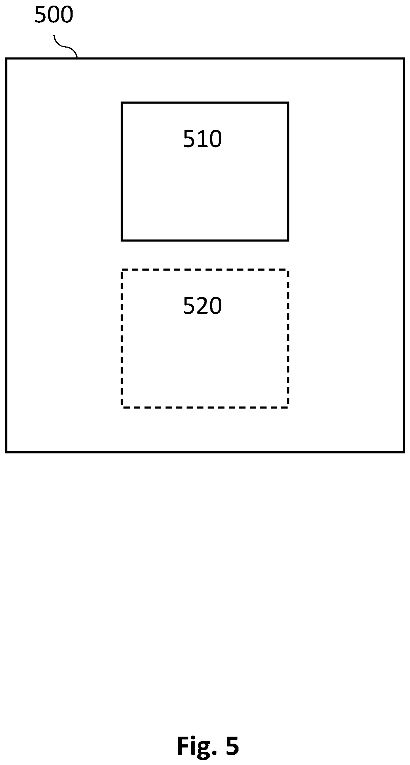

Fig. 5 illustrates an example of an apparatus 500 for detaching a fiber layer from a multilayer fiber composite material as described herein, such as the multilayer fiber composite material 100. The apparatus 500 comprises means 510 for detaching the fiber layer from the multilayer fiber composite material based on a method for detaching a fiber layer from a multilayer fiber composite material, such as method 300. The apparatus 500 optionally comprises second means 520 for completely detaching the fiber layer from the remaining fiber composite material in case that the expansion of the expansion material partially detaches the fiber layer from the remaining fiber composite material.

More details and aspects of apparatus 500 are explained in connection with the proposed technique or one or more examples described above, e.g., with reference to Fig. 1 or 3. The apparatus 500 may comprise one or more additional optional features corresponding to one or more aspects of the proposed technique, or one or more examples described above.

The apparatus 500 may enable the recovery of large parts of fiber layers without inducing fiber shortening or fiber damage.

The aspects and features described in relation to a particular one of the previous examples may also be combined with one or more of the further examples to replace an identical or similar feature of that further example or to additionally introduce the features into the further example.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A multilayer fiber composite material (100) comprising:
a matrix material (110);
a plurality of fiber layers (120) embedded in the matrix material (110); and
an expansion material (130) between at least one fiber layer (120-1) of the plurality of fiber layers and at least one other fiber layer (120-2) of the plurality of fiber layers (120), wherein the expansion material (110) is configured to, upon introduction of energy into the expansion material (110), expand for at least partially detaching at least one fiber layer of the plurality of fiber layers (120) from the remaining fiber composite material (100).

2. The multilayer fiber composite material (100) of claim 1, wherein the expansion material (130) comprises at least one of an inorganic expansion material and an organic expansion material.

3. The multilayer fiber composite material (100) of any one of the previous claims, wherein the expansion material (130) comprises at least one of a chemical foaming agent, a physical foaming agent and an expandable graphite.

4. The multilayer fiber composite material (100) of any one of the previous claims, wherein the expansion material (130) comprises at least one of an azo compound, a hydrazide, a carbazide, a tetrazole, a carbonate, a nitroso compound, azodicarbonamide, azobisisobutyronitrile, p,p'-oxybisbenzenesulfonylhydrazide, p-toluenesulfonyl hydrazide, benzenesulfonylhydrazide, p-toluenesulfonylsemicarbazide, p,p'-oxybisbenzenesulfonylsemi-carbazide, 5-phenyltetrazole, sodium bicarbonate, N,N'-dinitroso-pentamethylenetetramine, nitrogen and hydrofluorocarbon.

5. The multilayer fiber composite material (100) of any one of the previous claims, wherein the matrix material (110) comprises at least one of a thermoset and a thermoplastic.

6. The multilayer fiber composite material (100) of any one of the previous claims, wherein a mass fraction of the expansion material (130) relative to a total mass of the fiber composite material (100) is between 0.5 and 10 percent.

7. A method (200) for producing a multilayer fiber composite material, comprising:
introducing (210) an expansion material into the fiber composite material, wherein the expansion material is configured to, upon introduction of energy into the expansion material, expand for at least partially detaching at least one fiber layer of the plurality of fiber layers from the remaining fiber composite material.

8. The method (200) of claim 7, wherein introducing (210) the expansion material into the fiber composite material comprises introducing the expansion material into a matrix material of the fiber composite material.

9. The method (200) of claim 8, wherein the matrix material is initially separated from the fiber layer, wherein introducing the expansion material into the matrix material comprises adding (220a) the expansion material to the separated matrix material, and wherein the method (200) further comprises embedding (230a) the fiber layer into the matrix material provided with the expansion material.

10. The method (200) of claim 7, wherein the fiber layer is initially at least partially exposed, and wherein introducing (210) the expansion material into the fiber composite material comprises applying (220b) the expansion material to at least part of the exposed region of the fiber layer, and wherein the method (200) comprises laying (230b) a further fiber layer of the plurality of fiber layers onto the fiber layer provided with the expansion material.

11. The method (200) of claim 10, wherein the fiber layer is initially pre-impregnated with a matrix material of the fiber composite material, and wherein the method (200) further comprises curing the matrix material after laying (230b) the further fiber layer onto the fiber layer.

12. The method (200) of claim 10, wherein the fiber layer is initially separated from a matrix material of the fiber composite material, and wherein the method (200) further comprises embedding the fiber layer into the matrix material after applying (220b) the expansion material to the fiber layer.

13. The method (200) of any one of claims 7 to 12, wherein the fiber composite material is a fiber composite material according to any one of claims 2 to 6.

14. A method (300) for detaching a fiber layer from a multilayer fiber composite material according to any one of claims 1 to 6, comprising:
introducing (310) energy into the expansion material to expand the expansion material for at least partially detaching the fiber layer from the remaining fiber composite material.

15. The method (300) of claim 14, wherein introducing (310) energy into the expansion material comprises at least one of heating the expansion material, conducting an electric current through the expansion material and irradiating the expansion material with electromagnetic waves.
